# EUROPEAN PATENT APPLICATION

(11) **EP 4 740 729 A1**
(43) Date of publication of application: **13.05.2026**
(21) Application number: 25207421.6
(22) Date of filing: 08.10.2025
(51) Int. Cl.: A01K 7/00, C02F 1/32

(54) **DRINKING TROUGH FOR AN ANIMAL**

(30) Priority: 08.11.2024 NL 2039035
(71) Applicant: Ebbers Metalworks B.V, 7007CJ Doetinchem (NL)
(72) Inventor: EBBERS, Johan Martin Wilhelmus, DOETINCHEM (NL)
(74) Representative: Algemeen Octrooi- en Merkenbureau B.V.

(57) **Abstract**

A drinking trough (100) for an animal, such as a cow, the drinking trough comprising a receiving space (101) arranged for receiving a liquid (104), preferably water, wherein the receiving space is provided with an access opening (102) for allowing the animal to access the receiving space, an emitter unit (200) arranged for emitting UV radiation (201), preferably UV-C radiation, a cover arrangement (300) comprising a cover element (500) arranged for being above, below or at least partially provided below a surface of the liquid in the receiving space, during use, when the liquid is received by the receiving space, wherein the emitter unit is provided at a side of the cover element facing towards a bottom of the receiving space.

## Description

The present invention pertains to a drinking trough for an animal, such as a cow.

Drinking troughs for animals are present in many, if not all, places where animals are kept. Animals such as, but not limited to, cows have access to these drinking troughs in order to provide them with the necessary drinking water. These drinking troughs come in a multitude of shapes and sizes but can be generalized as having a receiving space arranged for receiving a liquid.

When the animal drinks from a drinking through it is highly desired that the water is clean, i.e. without a substantial amount of contamination such as bacteria or the like. Clean drinking water is beneficial to the animal. Having clean drinking water promotes water as well as food intake and prevents illness. Hence, clean and healthy drinking water is pertinent in view of production (e.g. milk production) and animal health.

Within the context of the present disclosure, clean and healthy drinking water is to be understood as drinking water with a relative low concentration of contamination from bacteria or the like.

Drinking water in drinking troughs is typically of low quality due to the growth of microorganisms such as, but not limited to, bacteria, viruses, fungi, molds, and other pathogens, in said drinking water. The microorganisms are introduced e.g. via the air or by the animal and can multiplate quickly, especially when temperatures of the water and/or surroundings are high, for example during summertime. Furthermore, drinking water may be contaminated at the source e.g. due to the presence of microorganisms in the water pipes that supply water to the drinking trough.

An objective of the present invention is to provide clean and healthy drinking water for an animal, such as a cow.

The problem may thus be formulated as the provision of clean drinking water for an animal, such as a cow.

The object of the invention is achieved by the means according to the invention and as further elucidated in the description below.

### Drinking trough for an animal

In a first aspect of the invention, provided is for a drinking trough for an animal, such as a cow, the drinking trough comprising:
- a receiving space arranged for receiving a liquid, preferably wherein the liquid is water, wherein the receiving space is provided with an access opening for allowing the animal to access the receiving space;
- an emitter unit arranged for emitting UV radiation, preferably UV-C radiation;
- a cover arrangement comprising a cover element (500), wherein the cover element (500) is arranged for being provided, above, below or at least partially below a surface of the liquid in the receiving space, during use, when the liquid is received by the receiving space, wherein the emitter unit is provided at a side of the cover element facing towards a bottom of the receiving space.

The drinking trough according to the invention comprises a receiving space arranged for receiving a liquid, preferably wherein the liquid is water, wherein the receiving space is provided with an access opening for allowing the animal to access the receiving space. More specifically, the access opening allows the animal to reach liquid present in the receiving space for drinking purposes.

The drinking trough according to the invention further comprises an emitter unit arranged for emitting UV radiation, preferably UV-C radiation. Highly advantageously, the emitter unit according to the invention eliminates microorganism contaminants in the water by emitting UV radiation, thereby providing for clean and healthy drinking water. In other words, the emitter unit according to the invention disinfects the drinking water due to the emission of UV radiation. When used in accordance with the invention, eliminating a microorganism refers to killing, inactivating, halting growth or the like. This may be achieved due to damaging of the DNA, by the UV radiation, of the microorganism.

Elimination of microorganisms using ultraviolet irradiation may also be referred to as ultraviolet germicidal irradiation (UVGI). UVGI is a disinfection technique employing ultraviolet (UV) light, particularly UV-C (180 to 280 nm), to kill or inactivate microorganisms.

In a preferred embodiment, the emitter unit according to the invention emits UV-C radiation. UV-C radiation (e.g. 180 to 280 nm) is highly advantageous as it is known to efficiently eliminate microorganisms such as bacteria, i.e. UV-C is germicidal.

In an embodiment, the emitter unit according to the invention emits UV-B radiation. In another embodiment, the emitter unit according to the invention emits UV-A radiation. In another embodiment, the emitter unit according to the invention emits UV-A radiation (315 to 400 nm), UV-B radiation (280 to 315 nm), UV-C radiation (100 to 280 nm), far-UVC radiation (200 to 235 nm), or a combination thereof. Whilst the germicidal effect of UV-C radiation is well understood and often used, UV-B and/or UV-A radiation can be used to eliminate microorganisms such the SARS-CoV-2 virus as described in i.a. Nicastro *et al.* (doi: 10.1038/s41598-021-94417-9). Hence, advantageously, the emitter according to the invention emits UV-B and or UV-C radiation.

The emitter according to the invention that emits UV radiation may be provided by any means known to the skilled person in the art as long as such means are compatible with the present invention. For example, the emitter is selected from, but not limited to, low-pressure mercury lamps, high-pressure mercury lamps, excimer lamps or light emitting diodes (LEDs). Such emitters may also be referred to as germicidal lamps, disinfection lamps or sterilizer lamps. In an embodiment the emitter unit is selected from low-pressure mercury lamps, high-pressure mercury lamps, excimer lamps or light emitting diodes (LEDs) or a combination thereof.

The drinking trough according to the invention further comprises a cover arrangement comprising a cover element arranged for being provided, above, below or at least partially below a surface of the liquid in the receiving space, during use, when the liquid is received by the receiving space, wherein the emitter unit is provided at a side of the cover arrangement facing towards a bottom of the receiving space. Highly advantageously, the cover arrangement according to the invention prevents UV radiation from harming the animal drinking the liquid in the drinking trough and/or the human interacting with, or in proximity to, the drinking trough.

The cover element being provided, above, below or at least partially below a surface of the liquid in the receiving space, during use, when the liquid is received by the receiving space provides for multiple advantages. Firstly, by being arranged, above, below or at least partially below the surface of the liquid, the volume of liquid below the cover element may be continuously irradiated by UV irradiation, thereby eliminating microorganisms. The volume of liquid above the cover element is shielded, i.e. covered, from UV irradiation and provides for a safe drinking zone, i.e. access zone, for the animal. By having the cover element at least partially provided below the surface of the liquid, the animal can see, smell and/or taste the water before drinking. By having the cover element at least partially provided below the surface of the liquid, the cover element can be arranged such that the volume of water above the cover element is limited, thereby preventing the animal from playing with the water (e.g. splashing the water by hitting it with the tongue), thereby avoid excess spilling and conserving water.

Preferably, the dimensions of the cover arrangement comprising the cover element, more preferably dimensions of the cover element, are such that at least the emitter unit is covered by the cover element, thereby preventing UV radiation from the emitter unit from directly emitting into the safe drinking zone for the animal.

In an embodiment, the dimensions of the cover arrangement comprising the cover element, or, dimensions of the cover element are the same, as the dimensions of the surface of the liquid. For example, if the dimensions of the liquid surface are 0.4 meter by 3 meters, the dimensions of the cover arrangement comprising the cover element are, 0.4 meter by 3 meters. Advantageously, the dimensions of the liquid surface can be easily measured and provided such that a (custom) cover arrangement can be produced.

In a further embodiment, the dimensions of the cover arrangement comprising the cover element, or, dimensions of the cover element are at least 10%, at least 20%, at least 30%, at least 40%, at least 50%, at least 60 %, at least 70%, at least 80% at least 90% at least 95% at least 99% of the dimensions of the liquid surface.

In a further embodiment, the dimensions of the cover arrangement comprising the cover element, or, dimensions of the cover element are such that it covers at least 10%, at least 20%, at least 30%, at least 40%, at least 50%, at least 60 %, at least 70%, at least 80% at least 90% at least 95% at least 99% of a cross-section of the receiving space parallel to the liquid surface.

The drinking trough according to the invention may comprise a UV absorbing material and/or liner for absorbing UV radiation emitted, during use, by the emitter unit, wherein the UV absorbing material and/or liner is provided in the receiving space and/or wherein a wall delimiting the receiving space is provided with the UV absorbing material and/or liner. Advantageously, the UV absorbing material and/or liner further avoids UV radiation from the emitter unit to reach the animal drinking the liquid in the drinking trough and/or the human interacting with, or in proximity to, the drinking trough.

In an embodiment, the UV absorbing material and/or liner comprises for example carbon black, UV-stabilized polymers such as polycarbonate, polyethylene, and polypropylene, hindered amine light stabilizers (HALS), UV absorbers such as benzotriazoles, benzophenones and organic nickel compounds or a combination thereof.

The drinking trough according to the invention may comprise a liquid inlet and/or liquid outlet, wherein the liquid inlet is arranged for allowing liquid to enter the receiving space and wherein the liquid outlet is arranged for allowing removal of the liquid from the receiving space. Advantageously, the liquid inlet is used to provide liquid, preferably water, preferably clean water, thereby further providing clean and healthy drinking water for an animal, such as a cow. Advantageously, the liquid outlet is used to remove liquid, for example contaminated liquid, thereby further providing clean and healthy drinking water for an animal, such as a cow.

In a preferred embodiment, the liquid outlet and the liquid inlet are positioned below the cover arrangement, more preferably below the cover element. Advantageously, positioning the liquid inlet and outlet below the cover arrangement, preferably below the cover element, prevents the animal, such as a cow, from blocking the inlet or outlet when drinking from the drinking trough.

In an embodiment, the liquid inlet is arranged such that liquid upon entering the receiving space is irradiated with UV irradiation. Such an arrangement is advantageous, as it results in the liquid being cleaned upon entering and dispersing into the receiving space.

In an embodiment, the liquid inlet is arranged such that liquid entering the receiving space creates a turbulence of liquid in the receiving space. Such an arrangement is advantageous, as the turbulence created by the liquid entering the receiving space promotes the flow of liquid comprising the microorganisms to be irradiated by the UV radiation. Such an arrangement is further advantageous, as the turbulence created promotes microorganisms, or other contaminant such as food, to be (re)suspended from the cover arrangement into the liquid, and settle on the bottom of the receiving space and/or be removed via the liquid outlet.

In an embodiment, the liquid inlet and liquid outlet are arranged to recirculate the liquid thereby promoting the liquid to be irradiated by the emitter according to the invention.

The drinking trough according to the invention further may comprise the emitter unit at a position that, during use, is at or below the surface of the liquid. In a preferred embodiment, the drinking trough according to the invention further comprises the emitter unit at a position that, during use, is below the surface of the liquid. It is understood that, when the emitter unit is at or below the surface liquid, said emitter unit, including any necessary connections to said emitter unit, are and remain functional at or below the surface of the liquid. For example, the emitter unit is waterproof, or is arranged in a waterproof housing.

The drinking trough according to the invention further may comprise two or more emitter units arranged for emitting UV radiation. For example, two or more emitter units are arranged to improve the irradiation of microorganisms in the liquid, for example when the drinking trough is particularly large or irregularly shaped, for example when the drinking trough comprises bends, ridges, curves etc that may prevent a single lamp from irradiating an area in the receiving space.

In an embodiment, the two or more emitter units emit UV radiation at the same wavelength or wavelength range. When used in accordance with the invention, the term wavelength refers to a specific wavelength and a range of a wavelength. For example, the two or more emitter units emit both at a wavelength of 200 nm. For example, the two or more emitter units emit both at a wavelength range of 200 to 240 nm.

In an embodiment, the two or more emitter units emit UV radiation at two or more wavelengths or wavelength ranges. For example, one emitter emits UV-C radiation and the second emitter emits UV-B radiation. For example, one emitter emits UV-C radiation at a wavelength in the range of 100 to 190 nm and one emitter emits UV-C radiation at a wavelength in the range of 190 to 280 nm. Advantageously, having two or more emitter units emit UV radiation at two or more wavelengths improves the elimination of microorganisms. Without being bound by any particular theory, certain microorganisms may be resistant to one particular wavelength, but not to a higher and/or lower wavelength. By providing two or more emitters emitting two or more wavelengths, eliminating microorganisms is improved.

In an embodiment, the two or more emitters are arranged in a single construction, for example an LED strip comprising two or more emitters, i.e. LEDs. In such an embodiment, the LEDs in the LED strip emit UV radiation at the same, or two or more wavelengths.

Preferably, the emitter unit emits light at a wavelength in the range of 100 to 280 nm, preferably 180 to 280 nm, more preferably 200 to 280 nm. It is understood that the wavelength in the range of 100 to 280 nm refers to the UV-C radiation. Highly advantageously, UV-C is germicidal and can eliminate microorganisms, thus when arranged according to the invention, provides for clean drinking liquid for an animal, such as a cow.

Preferably, the cover arrangement, preferably the cover element thereof, is arranged for absorbing and/or reflecting UV radiation emitted, during use, by the emitter unit, preferably arranged for absorbing and/or reflecting UV-C radiation. UV radiation is known to be harmful to animals and humans. Highly advantageously, the cover arrangement, more preferably the cover element, according to the invention prevents UV radiation from harming the animal drinking the liquid in the drinking trough and/or the human interacting with, or in proximity to, the drinking trough.

In a further embodiment, the cover element comprises a central portion and a wall, preferably a plurality of side walls, arranged for absorbing and/or reflecting radiation that is scattered or deflected by particles in the liquid.

Preferably, the side wall, or the plurality of side walls, enclose an angle with the central portion, more preferably, the side walls, or the plurality of side walls, are positioned substantially perpendicular, preferable perpendicular to the central portion.

In this regard, it is beneficial if the side wall, preferably the plurality of side walls, are extending towards the bottom of the receiving space and/or in an opposite direction.

Preferably, the side walls are provided at all the edges of the central portion. This allows for realising a volume below the cover element that is shielded to a relative large extent from the animal. This is in particular beneficial for avoiding, or at least reducing the risk of the animal being in contact with scattered or deflected radiation originating from the emitter unit.

In an embodiment, the UV absorbing material and/or liner comprises for example carbon black, UV-stabilized polymers such as polycarbonate, polyethylene, and polypropylene, hindered amine light stabilizers (HALS), UV absorbers such as benzotriazoles, benzophenones and organic nickel compounds or a combination thereof.

Preferably, during use, a surface of the cover element facing away from the bottom of the receiving space or an upper surface of the cover element encloses a sharp angle with the surface of the liquid, preferably, wherein the sharp angle is at least 1 degree. In other words, the cover element is sloped. Advantageously, the sharp angle of the cover element with the surface of the liquid results in e.g. saliva and/or food debris to slide off the cover arrangement and towards the bottom of the receiving space where it is irradiated by the emitter unit.

In an embodiment, the cover element encloses a sharp angle with the surface of the liquid, preferably, wherein the sharp angle is in the range of 1 to 45 degrees, such as 1 to in the range of 10 degrees, such as in the range of 1 to 20 degrees, such as in the range of 1 to 30 degrees.

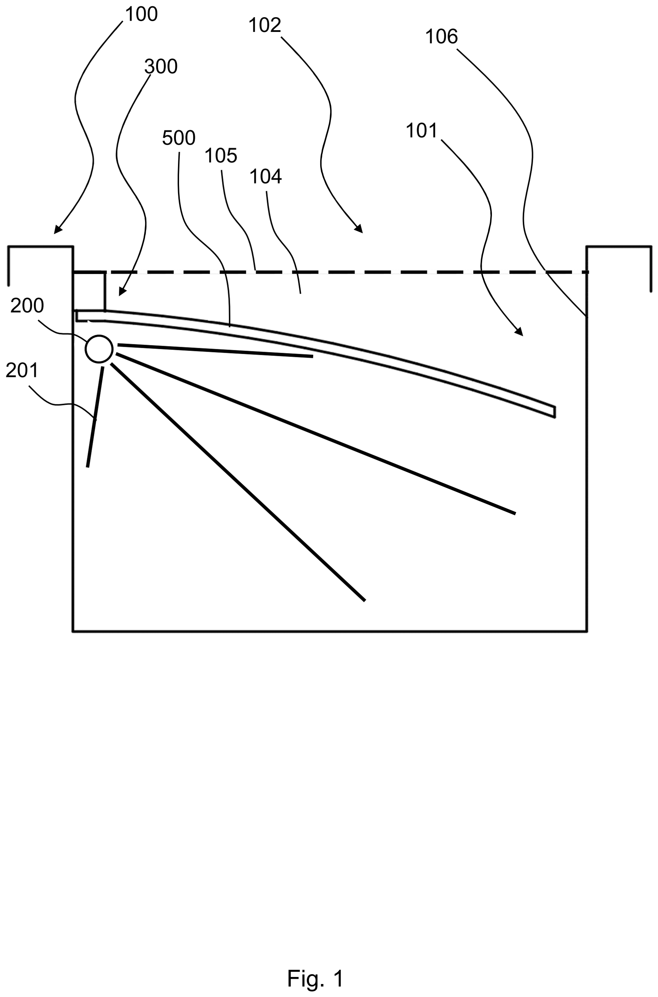

Preferably, the cover element comprises a curved surface, preferably a surface of the cover element facing away from the bottom of the receiving space or upper surface, in a direction away from the surface of the liquid. For example, as depicted in Figure 1. Advantageously, the curved surface of the cover element results in e.g. saliva and/or food debris to slide off the cover element and towards the bottom of the receiving space where it is irradiated by the emitter unit.

In an embodiment, the cover element, preferably a surface of the cover element facing away from the bottom of the receiving space or an upper surface comprises a curved surface wherein the curve is a two-dimensional curve, i.e. bending only within a flat surface, as depicted in i.a. Figure 1. For example, when the cover arrangement comprising the cover element is arranged in a square or rectangular drinking trough, the curve of the cover element can be a two-dimensional curve. In an embodiment the cover element is a curved surface wherein the curve is a three-dimensional curve, i.e. bending in multiple planes and surface that bends in all directions, like the surface of a sphere or umbrella. For example, when the cover element is arranged in a circular or oval-shaped drinking trough the cover element can be a three-dimensional curve.

In an embodiment, the cover element comprises a curved surface due to the material used for the cover element. For example, the cover element is made from a flexible material such as, but not limited to, rubber, silicone, polyurethane (PU), neoprene, polyvinyl chloride (PVC). By fastening the cover arrangement comprising a cover element made from a flexible material at a single side, the cover element curves in a direction away from the surface of the liquid due to gravity.

In a further embodiment, the cover element comprises one or more flexible regions between two or more rigid regions, wherein the one or more flexible regions are arranged to provide for a curved surface of the cover element. For example, the cover element comprises two rigid regions made from a metal, and a flexible region made from rubber. Due to the presence of the flexible region between the two rigid regions, the rigid regions can move relative to each.

The cover arrangement may comprise a cover element arranged for being moved, by the animal, towards the bottom of the receiving space. For example, the animal can push the cover element down with its nose, thereby increasing the volume of the liquid above the cover arrangement and providing sufficient drinking space for the animal. Advantageously, this allows the animal to drink the liquid more comfortably. Furthermore, and further advantageously, as the animal pushes the cover arrangement down, the liquid in the receiving area is moved (i.e. mixed) and due to the movement of the liquid in the receiving area, irradiation of the liquid is improved.

The drinking trough according may comprise a cover arrangement which comprises a cover element, wherein the cover element has a density higher than the liquid in the receiving space. Advantageously, the cover element with a density higher than the liquid in the receiving space ensures that at least one part of the cover arrangement is drawn below the surface of the liquid in the receiving space.

In an embodiment, the cover arrangement has a density lower than the liquid in the receiving space and further comprises a cover element with a density higher than the liquid in the receiving space. In an embodiment, the cover arrangement has a density lower than the liquid in the receiving space and further comprises a cover element with a density higher than the liquid in the receiving space arranged to at least partially position the cover arrangement below or at least partially below the surface of the liquid in the receiving space. Advantageously, having the cover element below or at least partially below the surface of the liquid in the receiving space results in the upper surface of the cover arrangement to encloses a sharp angle with the surface of the liquid, preferably, wherein the sharp angle is at least 1 degree. Advantageously, the sharp angle of the cover element with the surface of the liquid results in e.g. saliva and/or food debris to slide off the cover arrangement and towards the bottom of the receiving space where it is irradiated by the emitter unit.

In an embodiment, the cover arrangement further comprises a cover body attached to the cover element, wherein the cover body has a density higher than the liquid in the receiving space. Preferably, the cover body is attached to the cover element such that, during use, the cover element is at least partially drawn below the surface of the liquid.

The drinking trough according to the invention may comprise fastening means for fastening the emitter unit and/or cover arrangement to a wall of the drinking trough.

The drinking trough according to the invention may comprise fastening means that are arranged for allowing to lift the emitter unit and/or cover arrangement above the surface of the liquid. Advantageously, this allows for direct access to the receiving area, e.g. for easy cleaning of the receiving space.

In an embodiment, the drinking trough according to the invention comprises fastening means that are arranged for allowing to lift the emitter unit and/or cover arrangement above the surface of the liquid.

In an embodiment, the drinking trough may further comprise switching means arranged to disable and/or enable the emitter unit. The switching means may for instance be arranged for disabling the emitter unit when the emitter unit and/or cover is lifted. Advantageously, this prevents the emitter unit to emit UV radiation if the animal, or a person, lifts (whether it is purposefully or not) the emitter unit and/or cover arrangement above the surface of the liquid, thus preventing harm to the the animal and/or the person by exposure to UV radiation. Disabling the emitter unit is to be understood as ending emission of UV radiation by the emitter unit. Enabling the emitter unit is to be understood as starting emission of UV radiation by the emitter unit.

In an embodiment, the drinking trough further comprises a first detection arrangement arranged for disabling the emitter unit upon detection that the receiving space is free from liquid or upon detection that the liquid is below a predetermined height level below the receiving opening in the receiving space. This is advantageous for avoiding, or at least reducing the risk, that the animal is exposed to UV radiation originating from the emitter unit. In addition, or alternatively, the first detection unit may be arranged for enabling the emitter unit upon detection that the receiving space is provided with liquid or upon detection that the liquid is above a predetermined height level below the receiving opening in the receiving space.

In an embodiment, the drinking trough is provided with a further emitter unit provided at a side of the liquid inlet facing away from the receiving space. This allows for eliminating a microorganism present in the liquid before entering the receiving space via the liquid inlet.

In an embodiment, the drinking trough is further provided with a filter arrangement arranged for filtering the liquid.

In this regard, it is beneficial if the filter arrangement is provided at a side of the liquid inlet facing away from the receiving space.

In a practical embodiment, the drinking trough further comprises the switching means, the first detection arrangement and the further emitter unit. This is beneficial for realising a relative low level of contamination of the liquid in the receiving space.

### A kit of parts for a drinking trough

In a second aspect of the invention, provided is for a kit of parts for a drinking trough according to the invention, comprising:
- an emitter unit arranged for emitting UV radiation, preferably UV-C radiation;
- a cover arrangement comprising a cover element, wherein the cover element is arranged for being provided above, below or at least partially under a surface of the liquid in the receiving space, during use, when the liquid is received by the receiving space.

Embodiments of the drinking trough according to the first aspect of the present disclosure as presented previously are also applicable to the kit of parts according to the second aspect of the present disclosure, and vice versa. The advantages of the kit of parts according to the second aspect of the present disclosure correspond to advantages of the drinking trough according to first aspect of the present disclosure presented previously.

The kit of parts according to the invention further may comprise a liner for absorbing UV radiation emitted, during use, by the emitter unit, wherein the UV absorbing liner is provided in the receiving space.

The above-mentioned and other features and advantages of the invention are illustrated in the following description with reference to the enclosed drawings which are provided by way of illustration only and which are not limitative to the present invention.
Figure 1 schematically shows a drinking trough according to the first aspect of the present disclosure.
Figure 2 schematically shows a drinking trough according to the first aspect of the invention, further comprising an inlet and an outlet as described in embodiments throughout the present disclosure.
Figure 3 schematically shows a drinking trough according to the first aspect of the invention, further comprising two emitter units.
Figure 4 schematically shows a drinking trough according to the first aspect of the invention, further comprising a cover element.

In Figure 1 a drinking trough 100 is shown. The drinking trough 100 comprises a receiving space 101 arranged for receiving a liquid 104, preferably wherein the liquid 104 is water, wherein the receiving space 101 is provided with an access opening 102 for allowing the animal to access the receiving space 101. The drinking trough 100 further comprises an emitter unit 200 arranged for emitting UV radiation 201, preferably UV-C radiation. The drinking trough 100 further comprises a cover arrangement 300 comprising a cover element 500 arranged for being provided above, below or at least partially below a surface 105 of the liquid 104 in the receiving space 101, during use, when the liquid is received by the receiving space, wherein the emitter unit 200 is provided at a side of the cover element 500 facing towards a bottom of the receiving space 101.

The drinking trough 100 as shown in Figure 1 is shown to have the emitter unit 200 provided at a position that, during use, is below the surface of the liquid 104.

The drinking trough 100 as shown in Figure 1 is shown to have the cover element 500 having a curved surface in a direction away from the surface of the liquid.

The drinking trough 100 as shown in Figure 1 may further comprise a UV absorbing material and/or liner provided in the receiving space 101 and/or wherein a wall 106 delimiting the receiving space is provided with the UV absorbing material and/or liner.

The drinking trough 100 as shown in Figure 1 having the emitter unit 200 provided at a position that, during use, is at or below the surface of the liquid 104, preferably below the surface of the liquid

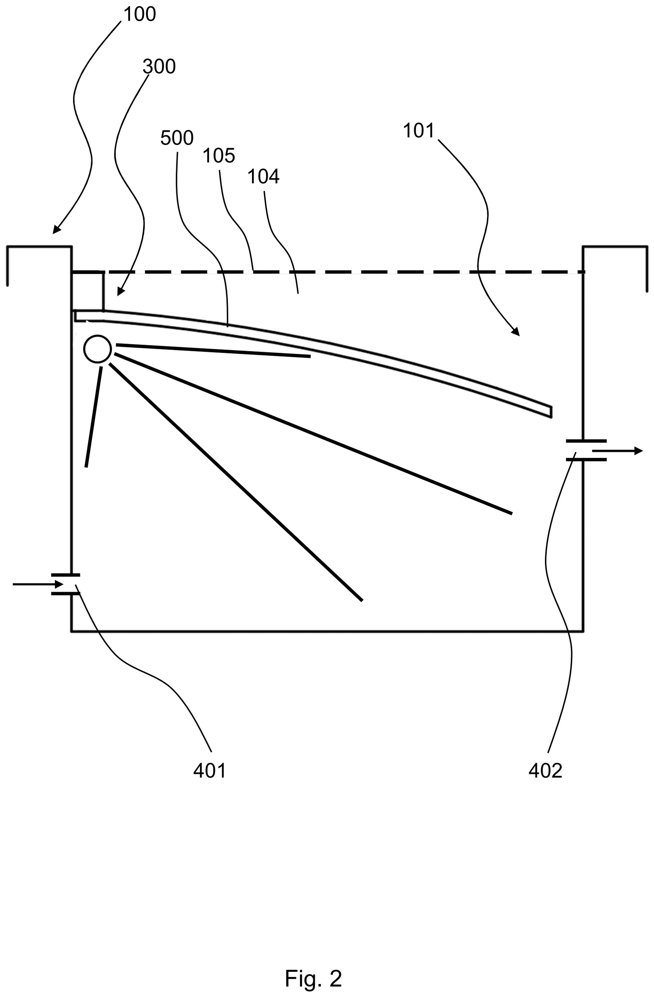

The drinking trough 100 as shown in Figure 2 may further comprise a liquid inlet 401 and/or liquid outlet 402, wherein the liquid inlet 401 is arranged for allowing liquid to enter the receiving space 101 and wherein the liquid outlet 402 is arranged for allowing removal of the liquid from the receiving space 101, preferably wherein the liquid outlet 402 and the liquid inlet 401 are positioned below the cover arrangement 300 comprising the cover element 500.

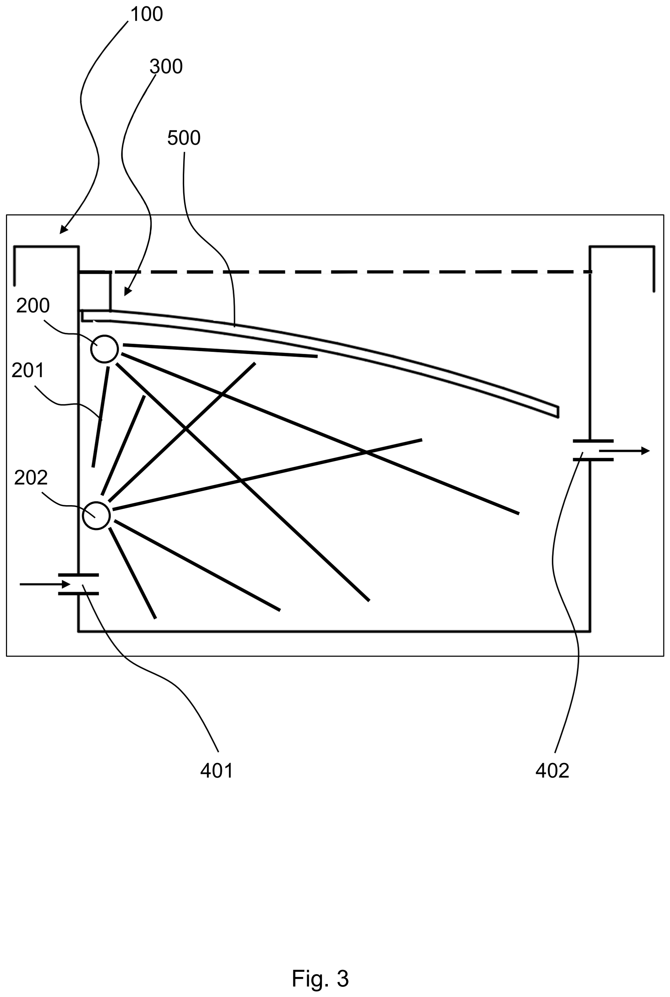

The drinking trough 100 as shown in Figure 3 may further comprise two or more emitter units 200, 202 arranged for emitting UV radiation 201 arranged below the cover arrangement 300 comprising the cover element 500. The drinking trough further optionally comprises a liquid outlet 402 and the liquid inlet 401.

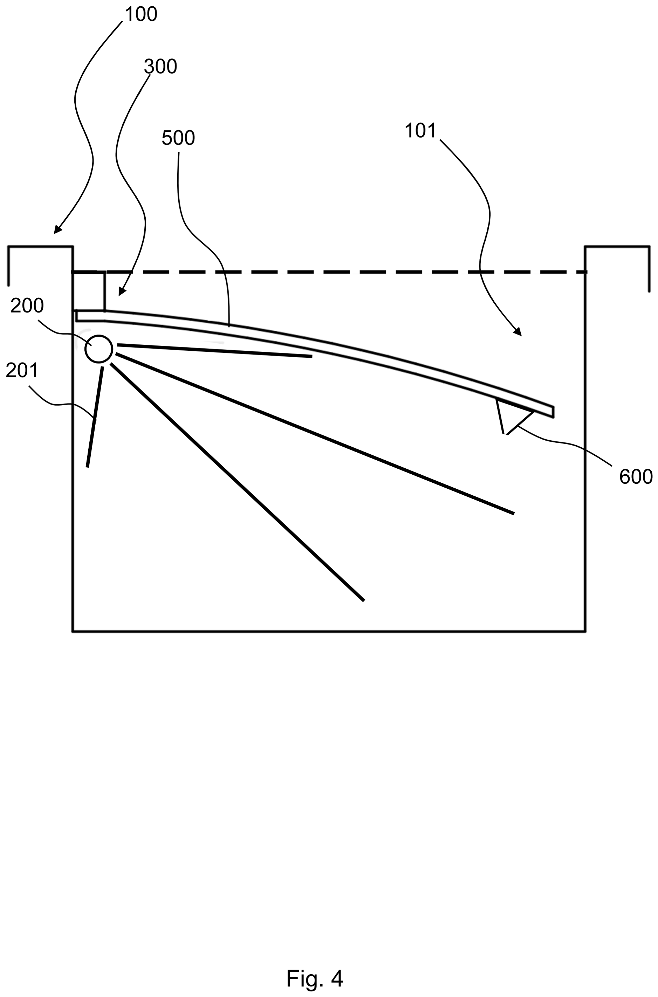

The drinking trough 100 as shown in Figure 4, may further comprise a cover arrangement 300 comprising a cover element 500 and a cover body 600, wherein the cover element 500 and/or cover body 600 has a density higher than the liquid in the receiving space 101.

## Claims

1. A drinking trough (100) for an animal, such as a cow, the drinking trough (100) comprising:
- a receiving space (101) arranged for receiving a liquid (104), preferably wherein the liquid (104) is water, wherein the receiving space (101) is provided with an access opening (102) for allowing the animal to access the receiving space (101);
- an emitter unit (200) arranged for emitting UV radiation (201), preferably UV-C radiation;
- a cover arrangement (300) comprising a cover element (500), wherein the cover element (500) is arranged for being provided above, below or at least partially below a surface (105) of the liquid (104) in the receiving space (101), during use, when the liquid (104) is received by the receiving space (101), wherein the emitter unit (200) is provided at a side of the cover element (500) facing towards a bottom of the receiving space (101).

2. The drinking trough according to claim 1, wherein the drinking trough comprises a UV absorbing material and/or liner for absorbing UV radiation emitted, during use, by the emitter unit, wherein the UV absorbing material and/or liner is provided in the receiving space and/or wherein a wall (106) delimiting the receiving space (101) is provided with the UV absorbing material and/or liner.

3. The drinking trough according to claim 1 or 2, wherein the drinking trough comprises a liquid inlet (401) and/or a liquid outlet (402), wherein the liquid inlet (401) is arranged for allowing liquid (104) to enter the receiving space (101) and wherein the liquid outlet (402) is arranged for allowing removal of the liquid from the receiving space (101), preferably wherein at least one of the liquid outlet (402) and the liquid inlet (401) is positioned below the cover element (500).

4. The drinking trough according to any one of the preceding claims, wherein the emitter unit is provided at a position that, during use, is at or below the surface of the liquid, preferably below the surface of the liquid.

5. The drinking trough according to any one of the preceding claims, wherein the emitter unit comprises two or more emitter units (201, 202) arranged for emitting UV radiation (201).

6. The drinking trough according to any one of the preceding claims, wherein the emitter unit is arranged for emitting light at a wavelength in the range of 100 to 280 nm, preferably 180 to 280 nm, more preferably 200 to 280 nm.

7. The drinking trough according to any one of the preceding claims, wherein the cover element has a density higher than the liquid in the receiving space.

8. The drinking trough according to any one of the preceding claims, wherein the cover element is arranged for absorbing and/or reflecting UV radiation emitted, during use, by the emitter unit, preferably arranged for absorbing and/or reflecting UV-C radiation.

9. The drinking trough according to any one of the preceding claims, wherein, during use, an upper surface of the cover element encloses a sharp angle with the surface of the liquid, preferably, wherein the sharp angle is at least 1 degree.

10. The drinking trough according to claim 9, wherein the upper surface of the cover element is curved in a direction away from the surface of the liquid.

11. The drinking trough according to any one of the preceding claims, wherein the cover element is arranged for being moved, by the animal, towards the bottom of the receiving space.

12. The drinking trough according to any one of the preceding claims, wherein the drinking trough comprises fastening means for fastening the emitter unit and/or cover arrangement to a wall of the drinking trough.

13. The drinking trough according to claim 12, wherein the fastening means are arranged for allowing to lift the emitter unit and/or cover arrangement above the surface of the liquid.

14. A kit of parts for a drinking trough (100) according to any one of the preceding claims, comprising:
- an emitter unit (200) arranged for emitting UV radiation (201), preferably UV-C radiation;
- a cover arrangement (300) comprising a cover element (500), wherein the cover element (500) is arranged for being provided above, below or at least partially below a surface (105) of the liquid (104) in the receiving space (101), during use, when the liquid (104) is received by the receiving space (101).

15. The kit of parts according to claim 14, further comprising a liner for absorbing UV radiation emitted, during use, by the emitter unit, wherein the UV absorbing liner is provided in the receiving space.
